# EUROPEAN PATENT SPECIFICATION

(11) **EP 0 327 289 B1**
(45) Date of publication and mention of the grant of the patent: **13.03.1996**
(21) Application number: 89300886.2
(22) Date of filing: 30.01.1989
(51) Int. Cl.: G11B 15/467

(54) **Magnetic recording and playback apparatus**
Magnetisches Aufzeichnungs- und Wiedergabegerät
Appareil d'enregistrement et de reproduction magnétique

(30) Priority: 30.01.1988 JP 21076/88; 30.01.1988 JP 21077/88
(43) Date of publication of application: 09.08.1989
(73) Proprietor: SONY CORPORATION, Tokyo 141 (JP)
(72) Inventor: Oishi, Hiroaki, Shinagawa-ku Tokyo (JP); Aoki, Shinji, Shinagawa-ku Tokyo (JP); Kawamoto, Hideo, Shinagawa-ku Tokyo (JP)
(74) Representative: Ayers, Martyn Lewis Stanley

(56) References cited:
- EP-A- 0 102 600
- EP-A- 0 129 224
- GB-A- 2 071 873
- JP-A-57 064 325
- JP-A-57 083 978
- JP-A-58 143 432
- JP-A-60 182 510
- JP-A-61 246 910
- US-A- 4 255 768
- PATENT ABSTRACTS OF JAPAN vol. 10, no. 19 (P-423) 24 January 1986,

## Description

The present invention relates to a magnetic recording and playback apparatus and more particularly to such an apparatus suitable for use in a data recorder or the like arranged to record or play back a digital signal on a magnetic tape using a magnetic head provided on a rotating drum.

In prior art data recorders of the described type, there has been proposed one in which the rotating speed of the rotating drum and the traveling speed of the magnetic tape are controlled to vary (Japanese Laid-open Patent Publication No. 60-658).

When incoming digital data having different fit rates are serially recorded on a magnetic tape, a second track can be formed by the rotating magnetic head with a predetermined track angle, if the rotating speed of the drum and the traveling speed are controlled in response to the fit transfer rate of the serial data with the predetermined relationship to each other. This means that the scanning speed of the magnetic head with respect to the magnetic tape is varied in accordance with the bit transfer rate.

Hence, even if the serial data having different bit transfer rates, such as digital data having different bit lengths or digital data having different repetition frequencies, are supplied thereto, it is possible to form recording tracks with a predetermined track angle and with a predetermined track pitch (hereinafter to be called "reference track pitch") between the tracks and to thereby record such digital data at the same recording wavelengths.

Thus, by selectively setting the recording wavelength at a predetermined value, high-density recording of digital data can be attained.

During reproducing, by controlling the rotating speed of the rotating drum and the traveling speed of the magnetic tape with the predetermined relationship therebetween, it is also made possible to cause the magnetic head to scan the record track at a desired scanning speed, and to thereby obtain serial data at a desired bit transfer rate.

Thus, since the serial data having a predetermined repetition frequency can be supplied therefrom, by selectively setting the rotating speed of the rotating drum and the traveling speed of the magnetic tape to values corresponding to the information processing unit such as a computer, it is made possible to obtain digital data adapted for such an information processing apparatus.

In performing such speed control of the rotating drum and the magnetic tape, there has been a problem that it is difficult to provide a wide range of variable speeds.

More particularly, during recording, when the bit transfer rate of serial data becomes low and as a result the rotating speed of the rotating drum and the traveling speed of the magnetic tape are slowed down, the electromagnetic conversion characteristic of the magnetic head will deteriorate, and the signal level of the playback signal is lowered in accordance thereto, when the magnetic tape is played back.

Similarly, during reproduction, when the rotating speed of the rotating drum and the traveling speed of the magnetic tape are slowed down, the playback efficiency of the signal played back through a magnetic head deteriorates and hence the signal level of the playback signal is lowered.

Therefore, in cases where the speeds of the rotating drum and the magnetic tape are controlled, it becomes necessary to change the frequency characteristic of an equalizer circuit depending on the bit transfer rate of the serial data to thereby compensate for the deteriorated SN ratio of the playback signal.

However, there has been a practical problem in implementation of such an equalizer circuit because the configuration of the equalizer circuit becomes complex in order that its frequency characteristic is greatly changed in accordance with the bit transfer rate.

Thus, with such an arrangement of data recorder, the range of controlled variable speeds of the rotating drum and the magnetic tape is restricted in actual practice by the range of changeable frequency characteristics of the equalizer circuit, and accordingly, there has been a problem that such an arrangement cannot be applied to the digital data whose bit transfer rate has varied over a wide range.

EP-A-0,129,224 discloses a rotary head PCM data recorder in which the speed of the head and the tape can be varied to a limited extent in dependence on the sample data rate of the data to be recorded.

It is an object of the present invention to provide a magnetic recording and playback apparatus in which the above mentioned problem is overcome.

As a method to solve the problems, a slow-motion playback technique in a video tape recorder (VTR) is adopted in the present invention.

More particularly, with the rotating drum being kept at a constant rotating speed, the travelling speed of the magnetic tape is controlled to vary in accordance with the bit transfer rate. The position of the magnetic head is controlled by a height control means formed, for example, of a piezoelectric device, and which serves to control the magnetic head to vary in the direction of the axis of rotation of the rotating drum (i.e., in the direction perpendicular to the recording track), and thereby a tracking control is performed. Such a magnetic head disposed on the rotating drum is called "DT head".

By so doing, in the same way as in the slow-motion playback of a VTR, at every time when the rotating drum makes a predetermined amount of rotation, the DT head is successively moved so as to trace the adjoining recording track. Hence, if the serial data is time-compressed, and the DT head intermittently records the compressed data during an interval in the recording track, it is ensured that the serial data can be recorded at the predetermined recording wavelength even when the bit transfer rate thereof is extremely slow.

Similarly, during reproduction, it is possible to obtain the serial data at the desired bit transfer rate, if the serial data is reproduced intermittently from the record track at the time when the DT head scans the track and the reproduced data is time-expanded to be an original data.

According to the present invention there is provided a magnetic recording and playback apparatus using a dynamic tracking magnetic head disposed on a rotating drum for forming oblique recording tracks in succession on a magnetic tape to record or play back serial digital data along the same, said magnetic recording and playback apparatus comprising:
tracking control means for controlling the position of said dynamic tracking magnetic head on said rotating drum in the direction perpendicular to said recording track in accordance with a bit transfer rate of said serial digital data:
speed control means for controlling the rotating speed of said rotating drum and/or the travelling speed of said magnetic tape in accordance with the bit transfer rate of said serial data; and
processor means for time-compressing said serial data to produce time-compressed serial data, said dynamic tracking magnetic head being coupled to receive said time-compressed serial data for recording said time-compressed serial data while said dynamic tracking magnetic head scans said recording track.

Since the apparatus is constructed such that the magnetic tape travels one reference track pitch while the rotating drum makes an integral number of rotations, the magnetic head becomes possible to make just tracking at the predetermined pitch, and, further, the range of displacement of the magnetic head can be reduced, upon the just-tracking.

An embodiment of the present invention will be described below in detail with reference to the accompanying drawings.
Figure 1 is a block diagram showing an embodiment of the present invention; and
Figure 2 is a schematic diagram for explaining operation of the same.

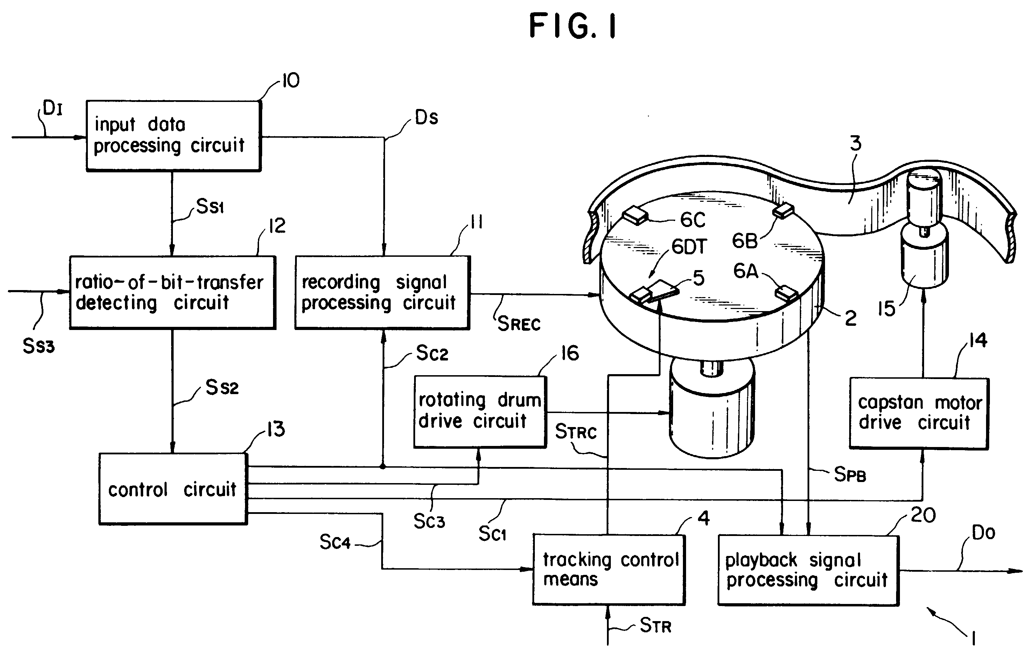

Referring to Figure 1, reference numeral 1 denotes a data recorder which is adapted to record digital data at a predetermined recording wavelength on a magnetic tape 3 which is wrapped around a rotating drum 2 at a wrap angle of approximately 180°, and also to play back and output the data at a desired bit transfer rate.

On the rotating drum 2, there are disposed, at intervals of an angle of 90°, a DT head 6DT (a magnetic head attached to the rotating drum 2 through a bimorph plate 5 formed of a piezoelectric device) whose height is adapted to be varied in the direction perpendicular to the recording track in response to a tracking control signal STRC which is supplied from a tracking control circuit 4 and magnetic heads 6A, 6B, and 6C, fixed on the rotating drum 2 at a predetermined height.

According to the present embodiment, when serial data at a fast bit transfer rate is to be recorded, a recording signal SREC is supplied to the magnetic heads 6A - 6C and 6DT, and thereby the serial data is sequentially recorded along the recording tracks.

Also, at the time of playback, when the serial data at a fast bit transfer rate is to be obtained, a playback signal S_{PB} sequentially obtained form the magnetic heads 6A - 6C and 6DT is subjected to signal processing to be output.

On the other hand, when serial data at a slower bit transfer rate than a predetermined value is to be recorded, the DT head 6DT out of the magnetic head 6A - 6C and 6DT is used for the recording of the serial data.

Also when serial data at a slower bit transfer rate than the predetermined value is to be obtained, a playback signal S_{PB} obtained through the DT head 6DT is subjected to signal processing to be output.

Hereafter in the present specification, the mode of operation for recording and playback of serial data by the use of the magnetic heads 6A - 6C and 6DT will be called the variable speed mode and the mode of operation for recording and playback by the use of the DT head 6DT out of the magnetic heads 6A - 6C and 6DT will be called the DT head mode.

An input data processing circuit 10 upon receipt of digital data D_{I} converts the same into serial data Dₛ and outputs this data to a recording signal processing circuit 11 and also detects the bit transfer rate of the serial data D_{S} and outputs the results as a bit-transfer-rate detected signal S_{S1} to a ratio-of-bit-transfer detecting circuit 12.

The ratio-of-bit-transfer detecting circuit 12, at the time of recording, detects, based on the bit-transfer-rate detected signal S_{S1}, the ratio of the bit transfer rate of the serial data D_{S} to the fastest bit transfer rate of the data which the data recorder 1 can record and play back (i.e., the maximum bit transfer rate, in recording serial data on a magnetic tape 3 at a predetermined recording wavelength, of the serial data of which recording and playback is achieved with the scanning speed of the magnetic heads 6A - 6C and 6DT relative to the magnetic tape 3 set at the maximum speed within the range of variable speed, and, in this connection, the rotation speed of the rotating drum 2 and the traveling speed of the magnetic tape 3 at this time being hereinafter called the maximum rotating speed and the maximum traveling speed, respectively), and outputs the detected result as a ratio-of-bit-transfer detected signal S_{S2} to a control circuit 13.

At the time of playback, based on a bit-transfer-rate detected signal S_{S3} obtained upon inputting, by the operator, of a designated bit transfer rate (which is the bit transfer rate of the serial data D₀ to be output from the data recorder 1), the ratio of the bit transfer rate to the maximum bit transfer rate is detected and the detected result is output as a ratio-of-bit-transfer detected signal S_{S2}.

The ratio of the bit transfer rate to the maximum bit transfer rate obtained based on the bit-transfer-rate detected signal S_{S1} and S_{S3} will hereinafter be called the ratio of bit transfer.

The control circuit 13, based on the ratio-of-bit-transfer detected signal S_{S2}, switches the mode of the data recorder 1 to the variable speed mode when the ratio of bit transfer is higher than the ratio of the number of the DT head 6DT to the total number of the magnetic heads 6A - 6C and 6DT attached to the rotating drum 2 (i.e., value 1/4).

On the other hand, when the ratio of the bit transfer rate is less than the value 1/4, it switches the mode of the data recorder 1 to the DT head mode.

Namely, the control circuit 13 outputs a control signal S_{C1} to a capstan motor drive circuit 14 to control the rotating speed of a capstan motor 15 to vary, and thereby, in the variable speed mode, the traveling speed of the magnetic tape 3 is controlled to vary such that the ratio of the traveling speed of the magnetic tape 3 to the maximum traveling speed becomes equal to the ratio of bit transfer.

Further, the control circuit 13 outputs a switching control signal S_{C2} and a drum servo control signal S_{C3} to the recording signal processing circuit 11 and a rotating drum drive circuit 16, whereby, in the variable speed mode, a recording signal S_{REC} obtained by modulating the serial data D_{S} is sequentially supplied to the magnetic heads 6A - 6C and 6DT, and also the rotating speed of the rotating drum 2 is controlled to vary so that the ratio of the rotating speed of the rotating drum 2 to the maximum rotating speed may become equal to the ratio of bit transfer.

Thus, when the ratio of bit transfer is within the range from value 1 to the first reference value 1/4, the traveling speed of the magnetic tape 3 and the rotating speed of the rotating drum 2 are controlled to vary in proportion to the ratio of bit transfer, and thereby, it is possible to control the scanning speed of the magnetic heads 6A - 6C and 6DT on the magnetic tape 3 to vary in accordance with the bit transfer rate of the serial data D_{S} and to thereby record the serial data D_{S} at the predetermined recording wavelength on the magnetic tape 3.

More particularly, the serial data D_{S} within the range from a bit transfer rate R, expressed as${\text{R = R}}_{\text{max}} \text{·} \frac{{\text{f}}_{\text{min}}}{{\text{f}}_{\text{max}}}$ where Rₘₐₓ represents the maximum bit transfer rate, fₘₐₓ represents the maximum rotating speed of the rotating drum 2, and fₘᵢₙ represents the rotating speed of the same at the first reference value, to the maximum bit transfer rate Rₘₐₓ can be recorded at the predetermined recording wavelength.

On the other hand, in the DT head mode, while the rotating drum 2 is rotated at the maximum rotating speed, a recording signal S_{REC} obtained as a result of compression of the serial data D_{S} along the time base followed by modulation of the same, is supplied to the DT head 6DT.

Further, the control circuit 13 controls the traveling speed of the magnetic tape 3 in accordance with the bit transfer rate so that the magnetic tape 3 travels one reference track pitch T while the rotating drum 2 makes an integral number of rotations.

More particularly, within the range of the bit transfer rate from value 1/4 to value 1/8, the magnetic tape 3 is arranged to travel one reference track pitch T while the rotating drum 2 makes four rotations and, within the range form value 1/8 to value 1/12, the magnetic tape 3 is arranged to travel one reference track pitch T while the rotating drum 2 makes eight rotations.

Similarly, within the ranges from value 1/12 to value 1/16, from value 1/16 to value 1/20,..., the magnetic tape 3 is adapted to travel one reference track pitch T while the rotating drum 2 makes 12 rotations, 16 rotations, ..., respectively.

With such an arrangement made, in forming the recording tracks with the DT head 6DT varied in height, it becomes possible to have the scanning locus of the DT head 6DT at the position shifted by one reference track pitch T in the forward direction from the position where the DT head 6DT has formed a record track, while the rotating drum 2 makes 4 rotations, 8 rotations, 12 rotations,... .

Hence, by controlling the height of the DT head 6DT in the DT head mode so that the scanning locus of the DT head 6DT may coincide with the scanning locus in the variable speed mode, it becomes possible to form recording tracks in succession at the reference track pitch and at the predetermined angle with the traveling direction of the magnetic tape 3.

More particularly, the control circuit 13, in controlling the height of the DT head 6DT by outputting a control signal S_{C4} to the tracking control circuit 4, causes the DT head 6DT, when it is at the side to start its scan along a recording track, to have its height shifted in the backward direction by an amount corresponding to the bit transfer rate, and then, while the DT head 6DT scans the magnetic tape 3, to be gradually shifted in the forward direction, and when it comes to the side to terminate its scan along the track, to have its height shifted in the forward direction, conversely to that at the starting side, by the same amount of shift.

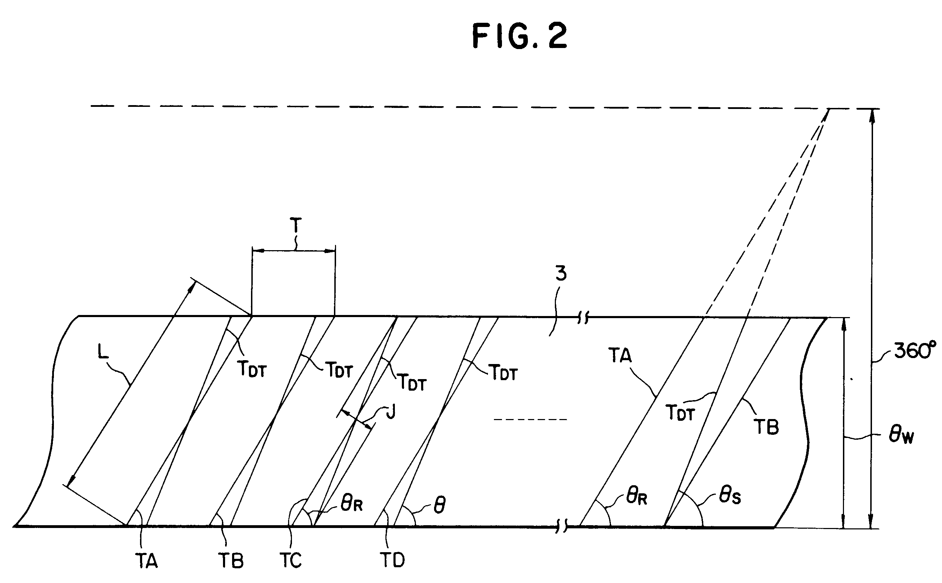

By arranging as described above, when, as shown in Figure 2, the lap angle of the magnetic tape 3 (180° in the present case) is denoted by W, the recording track length by L, the scanning loci of the magnetic heads 6A - 6C and 6DT in the variable speed mode by TA, TB, TC and TD, respectively, their angle of inclination by R, the scanning loci of the DT head 6DT when its height were not controlled to vary in the DT head mode by T_{DT}, and its angle of inclination by , then the range of displacement of the DT head 6DT denoted by J is given by$\text{J = L . sin} \left({\text{θ - θ}}_{\text{R}}\right) \text{.} \left(\text{1 -} \frac{\text{R}}{{\text{R}}_{\text{max}}}\right) \text{.}$

In this expression, when the traveling speed of the magnetic tape 3 is 0, and hence when the bit transfer rate R/Rₘₐₓ is 0, the range of displacement J becomes a maximum. Then, denoting the angle of inclination of the scanning loci T_{DT} by _{S}, J_{MAX} given by the following formula${\text{J}}_{\text{MAX}} {\text{= L . sin(θ}}_{\text{S}} {\text{- θ}}_{\text{R}} \text{)}$ gives the maximum range of displacement.

Since the lap angle is 180° in the present case, the range of displacement J_{M}A_{X} becomes${\text{J}}_{\text{MAX}} \text{=} \frac{\text{T}}{\text{2}} \text{.}$

Thus by controlling the traveling speed of the magnetic tape 3 to vary in accordance with the bit transfer rate such that the magnetic tape 3 travels one reference track pitch T while the rotating drum 2 makes an integral number of rotations, the range of displacement of the DT head 6DT can be reduced to 1/1.5 of that in the prior art.

In the present arrangement, the rate-of-bit-transfer detecting circuit 12, the control circuit 13, the capstan motor drive circuit 14, and the capstan motor 15 put together constitute speed control means for controlling the traveling speed of the magnetic tape 3 to vary so that the magnetic tape 3 travels one reference track pitch T while the rotating drum 2 makes an integral number of rotations.

On the other hand, the tracking control circuit 4, the bimorph plate 5, and the control circuit 13 constitute tracking control means for controlling the DT head 6DT out of the plurality of magnetic heads 6A, 6B, 6C and 6DT disposed on the rotating drum 2 to vary its height in the direction perpendicular to the recording track.

The control circuit 13 further controls the record signal processing circuit 11 so that the serial data DS is compressed 4 times, 8 times, 12 times and 16 times, within respective ranges of bit transfer rates, modulated, and output at the timing of the scans made by the DT head 6DT along predetermined recording tracks.

Thus, in the DT head mode, having a second reference value k defined as$\text{k =} \frac{\text{n}}{\text{N}}$ where N represents the total number of the magnetic heads 6A - 6C and 6DT disposed on the rotating drum and n represents the number of the DT heads 6DT, within the range of the bit transfer rate slower than the value R given by the following formula${\text{R = k . R}}_{\text{MAX}} \text{,}$ serial data Dₛ at the bit transfer rate expressed as${\text{R = R}}_{\text{MAX}} \text{.} \frac{\text{n}}{\text{N}} \text{.} \frac{\text{1}}{\text{S}} \text{,}$ where S is an arbitrary integer, can be recorded at the predetermined recording wavelength.

Thus, even if the bit transfer rate of the serial data D_{S} varies widely, the serial data can be recorded at the predetermined recording wavelength.

In playing back, the control circuit 13 performs driving control of the capstan motor 15 and the rotating drum 2 in the same way as in recording, and performs switching control of the operations of a playback signal processing circuit 20 this time instead of the recording signal processing circuit 11.

More particularly, in the variable speed mode, the playback signal S_{PB} sequentially obtained from the magnetic heads 6A, 6B, 6C and 6DT are demodulated and output as serial data D₀.

In the DT head mode, in reverse sequence to that in recording, the playback signal S_{PB} obtained from the DT head 6DT is demodulated at the timing at which the DT head 6DT successively scans the recording tracks, and then the signal is expanded along the time base and output.

At the time, the control circuit 13 outputs a control signal S_{C4} to the tracking control circuit 4 and performs tracking control of the DT head 6DT in response to a tracking error signal S_{TR} supplied from a tracking error detaching circuit (not shown).

It further outputs the control signals S_{C1} and S_{C3} causing the rotating drum 2 to be rotated at its maximum rotating speed and the magnetic tape 3 to be controlled to vary its traveling speed in accordance with the bit transfer rate of the serial data D₀ so that the magnetic tape 3 travels one reference track pitch while the rotating drum 2 makes an integral number of rotations.

Thus, in the variable speed mode, within the range over the first reference value, the serial data D₀ at a desired bit transfer rate can be obtained by demodulating the playback signal S_{PB}.

Further, in the DT head mode, the serial data D₀ corresponding to the bit-transfer-rate detected signal S_{S3} can be obtained by expanding the demodulated playback signal along the time base, and in addition thereto, the range of displacement of the DT head 6DT can be reduced to 1/1.5 of that in the prior art, as was the case at the time of recording.

Although, in the foregoing description of the embodiment, there were disposed four magnetic heads on the rotating drum and one of the magnetic heads was the DT head, the numbers of the magnetic heads and the DT head disposed on the rotating drum are not limited to those but can be selectively changed to different numbers according to the need.

Although the case where the operating modes were switched according to the bit transfer rate was described in the foregoing embodiment, the present invention is not limited to that but is also applicable to the case where only the DT head mode is used.

Although, in the above embodiment, the case where, in the DT head mode, the rotating speed of the rotating drum was set to the maximum rotating speed and the traveling speed of the magnetic tape was controlled to vary stepwise in accordance with the bit transfer rate was described, the present invention is not limited to that, but it can also be practicable to have the rotating speed, or to have the speeds of both the rotating drum and the magnetic tape changed stepwise.

Although the case was described in the above embodiment where the traveling speed of the magnetic tape was changed using the maximum bit transfer rate as the reference value, the present invention is not limited to that but a predetermined bit transfer rate can be used as the reference value.

Although, in the above described embodiment, the case where the ratio of bit transfer was obtained from the bit transfer rate and, based on the ratio, the traveling speed of the magnetic tape was changed, the present invention is not limited to that but it can be changed directly based on the bit transfer rate.

Although the embodiment was described above as to the case where the traveling speed of the magnetic tape was changed both at the time of recording and at the time of playback, the present invention is not limited to that but the traveling speed of the magnetic tape can be adapted to change only at the time of recording or at the time of playback.

Further, the above embodiment was described as to the case where the present invention was applied to a data recorder, but the application of the present invention is not limited to that. It can be widely applied for example to such a magnetic recording and playback apparatus as adapted to record and play back a video signal obtained from an image processing apparatus.

According to the present invention as described above, by arranging such that the rotating speed of the rotating drum or the traveling speed of the magnetic tape is controlled to vary in accordance with the bit transfer rate of serial data to thereby cause the magnetic tape to travel one reference track pitch while the rotating drum makes an integral number of rotations, it is made possible to obtain a magnetic recording and playback apparatus in which the range of displacement of the DT head is made smaller than that in the prior art apparatus.

## Claims

1. A magnetic recording and playback apparatus using a dynamic tracking magnetic head (6DT) disposed on a rotating drum (2) for forming oblique recording tracks in succession on a magnetic tape (3) to record or play back serial digital data along the same, said magnetic recording and playback apparatus comprising:
speed control means (12-16) for controlling the rotating speed of said rotating drum and/or the travelling speed of said magnetic tape in accordance with the bit transfer rate of said serial data; said magnetic recording and playback apparatus being characterized by tracking control means (4) for controlling the position of said dynamic tracking magnetic head on said rotating drum in the direction perpendicular to said recording track in accordance with a bit transfer rate of said serial digital data;
processor means (11) for time-compressing said serial data to produce time-compressed serial data, said dynamic tracking magnetic head being coupled to receive said time-compressed serial data for recording said time-compressed serial data while said dynamic tracking magnetic head scans said recording track.

2. A magnetic recording and playback apparatus according to claim 1, wherein said speed control means performs speed control so that said magnetic tape travels one reference track pitch while said rotating drum makes an integer number of rotations, said integer number being determined in accordance with the bit transfer rate of said serial data.

3. A magnetic recording and playback apparatus according to claim 2, wherein said speed control means includes means (12) for detecting the bit transfer rate of said serial data and comparator (13) means for producing a control signal when the detected bit transfer rate of said serial data is below a first predetermined bit transfer rate, and wherein, in response to said control signal, said processor means (11) is rendered active to time-compress said digital data and said tracking control means (4) is activated to control the position of the dynamic tracking magnetic head so as to vary the position of the dynamic tracking magnetic head in said perpendicular direction while said dynamic tracking magnetic head performs recording and playback.

4. A magnetic recording and playback apparatus according to claim 3, wherein, said comparator means is operative when the detected bit transfer rate of said serial data is above a second predetermined bit transfer rate, to deactivate said processor means and to render said tracking control means inoperative to vary the position of the dynamic tracking head in said perpendicular direction while said dynamic tracking magnetic head performs recording and playback.

5. A magnetic recording and playback apparatus according to claim 4, wherein said speed control means is operative when the detected bit transfer rate of said serial data is above said second predetermined bit transfer rate to variably control said rotating speed of said rotating drum in accordance with the bit transfer rate of said serial data.

6. A magnetic recording and playback apparatus according to claim 5, wherein said first predetermined bit transfer rate and said second predetermined bit transfer rate are the same.

## Patentansprüche

1. Magnetisches Aufzeichnungs-/Wiedergabegerät, das einen dynamischen Spurverfolgungs-Magnetkopf (6DT) benutzt, der auf einer Drehtrommel (2) zum Bilden schrägverlaufender Aufzeichnungsspuren in Aufeinanderfolge auf einem Magnetband (3) zum Aufzeichnen oder Wiedergeben serieller Digitaldaten längs derselben angeordnet ist, wobei das magnetische Aufzeichnungs-/Wiedergabegerät ein Geschwindigkeits-Steuerungsmittel (12 - 16) zum Steuern der Drehgeschwindigkeit der Drehtrommel und/oder der Laufgeschwindigkeit des Magnetbands in Übereinstimmung mit der Bit-Übertragungsrate der seriellen Daten umfaßt, welches magnetische Aufzeichnungs-/Wiedergabegerät **gekennzeichnet** ist durch
ein Spurverfolgungs-Steuerungsmittel (4) zum Steuern der Position des dynamischen Spurverfolgungs-Magnetkopfs auf der Drehtrommel in der Richtung senkrecht zu der Aufzeichnungsspur in Übereinstimmung mit einer Bit-Übertragungsrate der seriellen Digitaldaten,
ein Verarbeitungsmittel (11) zum Zeitkomprimieren der seriellen Daten, um zeitkomprimierte serielle Daten zu erzeugen, wobei der dynamische Spurverfolgungs-Magnetkopf derart geschaltet ist, daß er die zeitkomprimierten seriellen Daten zum Aufzeichnen der zeitkomprimierten seriellen Daten empfängt, während der dynamische Spurverfolgungs-Magnetkopf die Aufzeichnungsspur überläuft.

2. Magnetisches Aufzeichnungs-/Wiedergabegerät nach Anspruch 1, bei dem das Geschwindigkeits-Steuerungsmittel eine Geschwindigkeits-Steuerung derart durchführt, daß sich das Magnetband um eine Referenz-Spurstrecke weiterbewegt, während die Drehtrommel eine ganzzahlige Anzahl von Umdrehungen ausführt, welche ganzzahlige Anzahl in Übereinstimmung mit der Bit-Übertragungsrate der seriellen Daten bestimmt ist.

3. Magnetisches Aufzeichnungs-/Wiedergabegerät nach Anspruch 2, bei dem das Geschwindigkeits-Steuerungsmittel ein Mittel (12) zum Erfassen der Bit-Übertragungsrate der seriellen Daten und ein Vergleichsmittel (13) zum Erzeugen eines Steuersignals dann, wenn die erfaßte Bit-Übertragungsrate der seriellen Daten unterhalb einer ersten vorbestimmten Bit-Übertragungsrate liegt, enthält und bei dem das Verarbeitungsmittel (11) in Reaktion auf das Steuersignal aktiviert wird, um die digitalen Daten einer Zeitkompression zu unterziehen, und das Spurverfolgungs-Steuerungsmittel (4) aktiviert wird, um die Position des dynamischen Spurverfolgungs-Magnetkopfs derart zu steuern, daß die Position des dynamischen Spurverfolgungs-Magnetkopfs in der senkrechten Richtung verändert wird, während der dynamische Spurverfolgungs-Magnetkopf das Aufzeichnen und Wiedergeben durchführt.

4. Magnetisches Aufzeichnungs-/Wiedergabegerät nach Anspruch 3, bei dem das Vergleichsmittel wirksam ist, wenn die erfaßte Bit-Übertragungsrate der seriellen Daten oberhalb einer zweiten vorbestimmten Bit-Übertragungsrate liegt, um das Verarbeitungsmittel zu deaktivieren und um das Spurverfolgungs-Steuerungsmittel unwirksam zu machen, die Position des dynamischen Spurverfolgungs-Magnetkopfs in der senkrechten Richtung zu verändern, während der dynamische Spurverfolgungs-Magnetkopf das Aufzeichnen und Wiedergeben durchführt.

5. Magnetisches Aufzeichnungs-/Wiedergabegerät nach Anspruch 4, bei dem das Geschwindigkeits-Steuerungsmittel wirksam ist, wenn die erfaßte Bit-Übertragungsrate der seriellen Daten oberhalb der zweiten vorbestimmten Bit-Übertragungsrate liegt, um die Drehgeschwindigkeit der Drehtrommel in Übereinstimmung mit der Bit-Übertragungsrate der seriellen Daten veränderbar zu steuern.

6. Magnetisches Aufzeichnungs-/Wiedergabegerät nach Anspruch 5, bei dem die erste vorbestimmte Bit-Übertragungsrate und die zweite vorbestimmte Bit-Übertragungsrate dieselben sind.

## Revendications

1. Appareil d'enregistrement et reproduction magnétiques utilisant une tête magnétique à suivi de piste dynamique (6DT) disposée sur un tambour tournant (2) pour former des pistes d'enregistrement obliques successives sur une bande magnétique (3) pour enregistrer ou reproduire des données numériques série le long de celle-ci, ledit appareil d'enregistrement et reproduction magnétiques comprenant:
- des moyens de commande de vitesse (12 à 16) pour commander la vitesse de rotation dudit tambour tournant et/ou la vitesse de défilement de ladite bande magnétique selon la cadence de transfert des binaires desdites données série, ledit appareil d'enregistrement et reproduction magnétiques étant caractérisé par des moyens de commande de suivi de piste (4) pour commander la position de ladite tête magnétique à suivi de piste dynamique sur ledit tambour tournant dans la direction perpendiculaire à ladite piste d'enregistrement selon la cadence de transfert des binaires desdites données série;
- des moyens de processeur (11) pour compresser dans le temps lesdites données série pour produire des données série compressées dans le temps, ladite tête magnétique à suivi de piste dynamiqu étant connectée pour recevoir lesdites données série compressées dans le temps pour enregistrer lesdites données série compressées dans le temps pendant que ladite tête magnétique à suivi de piste dynamique balaie ladite piste d'enregistrement.

2. Appareil d'enregistrement et reproduction magnétiques selon la revendication 1, dans lequel lesdits moyens de commande de vitesse effectuent la commande de vitesse de telle manière que ladite bande magnétique se déplace d'un pas de piste de référence pendant que ledit tambour tournant fait un nombre entier de tours, ledit nombre entier étant déterminé selon la cadence de transfert des binaires desdites données série.

3. Appareil d'enregistrement et reproduction magnétiques selon la revendication 2, dans lequel lesdits moyens de commande de vitesse comprennent des moyens (12) pour détecter la cadence de transfert des binaires desdites données série, et des moyens de comparateur (13) pour produire un signal de commande lorsque la cadence de transfert des binaires détectée desdites données série est inférieure à une cadence prédéterminée de transfert des binaires, et dans lequel, en réponse audit signal de commande, lesdits moyens de processeur (11) sont rendus actifs pour compresser dans le temps lesdites données numériques, et lesdits moyens de commande de suivi de piste (4) sont activés pour commander la position de la tête magnétique à suivi de piste dynamique de manière à faire varier la position de la tête magnétique à suivi de piste dynamique dans ladite direction perpendiculaire pendant que ladite tête magnétique à suivi de piste dynamique effectue l'enregistrement ou la reproduction.

4. Appareil d'enregistrement et reproduction magnétiques selon la revendication 3, dans lequel lesdits moyens de comparateur sont opérants lorsque la cadence détectée de transfert des binaires desdites données série est supérieure à une deuxième cadence prédéterminée de transfert des binaires, pour désactiver lesdits moyens de processeur et pour rendre lesdits moyens de commande de suivi de piste inopérants pour faire varier la position de la tête magnétique à suivi de piste dynamique dans ladite direction perpendiculaire pendant que ladite tête magnétique à suivi de piste dynamique effectue l'enregistrement ou la reproduction.

5. Appareil d'enregistrement et reproduction magnétiques selon la revendication 4, dans lequel lesdits moyens de commande de vitesse sont opérants lorsque la cadence détectée de transfert des binaires desdites données série est supérieure à ladite deuxième cadence prédéterminée de transfert des binaires, pour commander de manière variable ladite vitesse de rotation dudit tambour tournant selon la cadence de transfert des binaires desdites données série.

6. Appareil d'enregistrement et reproduction magnétiques selon la revendication 5, dans lequel ladite première cadence prédéterminée de transfert des binaires et ladite deuxième cadence prédéterminée de transfert des binaires sont les mêmes.
